Europäisches Patentamt

European Patent Office

Office européen des brevets

(11) Veröffentlichungsnummer: **0 143 428**
A2

(12) **EUROPÄISCHE PATENTANMELDUNG**

(21) Anmeldenummer: 84114058.5

(22) Anmeldetag: 22.11.84

(51) Int. Cl.⁴: **F 01 B 11/00,** F 01 L 23/00,
F 16 N 13/16

(30) Priorität: 24.11.83 DE 3342388

(43) Veröffentlichungstag der Anmeldung: 05.06.85
Patentblatt 85/23

(84) Benannte Vertragsstaaten: **AT BE CH DE FR GB IT LI LU
NL SE**

(71) Anmelder: **WiWa Wilh. Wagner GmbH & Co. KG,
Gewerbestrasse 1-3, D-6335 Lahnau 1/Waldgirmes (DE)**

(72) Erfinder: **Willig, Lothar, Dipl.-Ing., Breslauer Strasse 13,
D-6335 Lahnau 1 (DE)**

(74) Vertreter: **Patentanwälte Dipl.-Ing. R. Schlee Dipl.-Ing. A.
Missling, Bismarckstrasse 43, D-6300 Giessen (DE)**

(54) **Luftmotor für Farbspritzgeräte, Fettpressen und dergleichen.**

(57) Ein Schieber (5), mit dem die Zuführung von Treibluft zu einem doppelwirkenden Zylinder (1, 4) gesteuert wird, befindet sich innerhalb eines Zylinderkopfes (3). Der Schiebeteil (33) des Steuerschiebers (5) und ein Mitnehmer (21) für diesen bestehen vorzugsweise aus Kunststoff. Die Druckluft wird nach Arbeitsleistung in einen Entspannungsraum (50) geleitet, der über einen Filter (51) mit der Umgebung in Verbindung steht.

Durch die Anordnung des Steuerschiebers (5) im Zylinderkopf (3) wird eine kurze Baulänge desselben erreicht. Diese kurze Baulänge und die weitgehende Verwendung von Kunststoff führt zu einer Verringerung von Massenkräften.

Dipl.-Ing. Richard Schlee
Dipl.-Ing. Arne Missling

6300 Lahn-Giessen 1
Bismarckstrasse 43
Telefon: (0641) 71019

0143428

WiWa Wilh. Wagner GmbH & Co. KG, Gewerbestraße 1-3
6335 Lahnau 1/Waldgirmes

## Luftmotor für Farbspritzgeräte, Fettpressen und dergleichen

### Beschreibung:

Die Erfindung bezieht sich auf einen Luftmotor für Farbspritzgeräte, Fettpressen und dergleichen, mit einem Zylinder großen Durchmessers, in dem ein von der treibenden Luft beaufschlagter Kolben angeordnet ist und einer Steuereinrichtung mit einem Schieber, der in der Nähe der Endstellungen des Kolbens die Luft zum Zylinder umsteuert, wobei der Schieber durch eine mit Anschlägen versehene Stange (Steuerstange) über einen mit der Steuerstange verbundenen Mitnehmer bewegt wird, welche Steuerstange mit der Kolbenstange des Kolbens so verbunden ist, daß diese erst in der Nähe der Endstellungen über die Anschläge mit der Steuerstange gekuppelt wird, wobei auf einem in die Kolbenstange eingreifenden Teil der Steuerstange eine Feder zur Vorspannung der Steuerstange vorgesehen ist und die Steuerstange mittels mindestens eines Hebels (Kipphebel) in axialer Richtung gedrückt wird, der unter einer rechtwinklig zur Steuerstange wirkenden Federkraft steht, die die Steuerstange einerseits eines mittleren Totpunktes nach oben und andererseits dieses Totpunktes nach unten drückt.

0143428

Bei einem bekannten Luftmotor dieser Art (Deutsches Gebrauchsmuster 1 992 789) liegt der Schieber außerhalb des Zylinders. Hierbei ist an die Außenseite eines die Zylinderbohrung enthaltenden Zylinderkörpers ein besonderes Bauteil angeschraubt, das eine Schieberbohrung enthält, in der der Schiebeteil des Schiebers bewegbar ist.

Der Schiebeteil hat eine Länge, die größer ist als die Länge des Zylinders. Dies ergibt sich bei der bekannten Konstruktion daraus, daß die Luft dem Zylinder über kurze, gerade Bohrungen zugeführt wird, die rechtwinklig zur Zylinderachse verlaufen und in die Schieberbohrung einmünden. Der aus Stahl bestehende Schiebeteil hat wegen seiner großen Länge eine große Masse, so daß wegen der sehr raschen Schieberbewegungen große Massenkräfte auftreten.

Bei dem bekannten Luftmotor wird die Luft, nachdem sie im Zylinder Arbeit geleistet hat, über Bohrungen mit geringem Volumen unmittelbar ins Freie geleistet. Bei der Entspannung der Luft beim Austritt aus diesen Bohrungen entstehen lästige Geräusche.

Der Erfindung liegt die Aufgabe zugrunde, einen Luftmotor der eingangs genannten Art so auszubilden, daß der Schiebeteil des Schiebers möglichst kurz ausgebildet werden kann.

Diese Aufgabe wird nach der Erfindung dadurch gelöst, daß der Steuerschieber innerhalb eines den Zylinder an einem Ende (Zylinderkopf-Ende) abschließenden Zylinderkopfes angeordnet ist und vom Steuerschieber eine Leitung zum anderen Ende (Zylinderboden-Ende) des Zylinders geführt ist.

Durch eine solche Anordnung des Steuerschiebers wird ein äußeres besonderes Anbauteil, das sich längs des Zylinders erstreckt, vermieden. Die Länge des Steuerschiebers ist nicht mehr von der Länge des Zylinders abhängig, so daß der Steuerschieber auch kürzer ausgebildet werden kann als der Zylinder.

Die Massenkräfte, die bei der Bewegung des Steuerschiebers entstehen, sind deshalb relativ gering, so daß mit hoher Geschwindigkeit gearbeitet werden kann, ohne daß die Gefahr vorzeitigen Verschleißes entsteht. Die geschützte Unterbringung des Steuerschiebers innerhalb des Zylinderkopfes bringt auch eine große Betriebssicherheit, da Beschädigungen des Steuerschiebers praktisch ausgeschlossen sind.Durch die Erfindung wird auch erreicht, daß bei Luftmotoren mit verschiedenen langen Zylindern stets der gleiche Zylinderkopf samt eingebauter Steuerung verwendet werden kann, da nicht wie bei der bekannten Konstruktion, die Länge des Steuerschiebers von der Länge des Zylinders abhängig ist.

Die vom Steuerschieber zum Zylinderboden-Ende führende Leitung kann gemäß Anspruch 2 durch ein besonderes Rohr gebildet sein, das außerhalb einer Zylinderbüchse verläuft. Es ist dann eine sehr einfache Konstruktion möglich, da die Zylinderbüchse ein glattes Rohr sein kann, also kein kompliziertes Bauteil zu sein braucht, innerhalb dem Bohrungen angeordnet sind.

Gemäß einer Weiterbildung der Erfindung (Anspruch 3) ist im Zylinderkopf ein Entspannungsraum angeordnet, der über den Schieber mit den beiderseits des Kolbens befindlichen Zylinderräumen verbindbar ist. Bei einem so ausgebildeten Luftmotor wird die Luft,nachdem sie Arbeit geleistet hat, nicht mehr unmittelbar ins Freie ausgestoßen, sondern gelangt zunächst in den Entspannungsraum.Der Entspannungsraum kann an eine Abluftleitung angeschlossen sein. Er kann aber auch mit einem Filter (Anspruch 4) ausgerüstet sein, über den die Abluft ins Freie entlassen wird. Dadurch wird eine gute Schalldämmung erreicht. Im Filter werden Öltröpfchen abgefangen, so daß eine Verschmutzung der Umgebung sicher vermieden wird. Die Anordnung des Entspannungsraumes im Zylinderkopf hat den Vorteil, daß die warme Arbeitsluft den Entspannungsraum aufwärmt, so daß eine übermäßige Abkühlung durch die Entspannung der Luft im Entspannungsraum vermieden wird.

- 4 -

0143428

Vorteilhafterweise besteht der Schiebeteil des Schiebers aus Kunststoff. Dadurch wird ein geringes Gewicht des Schiebeteiles erzielt, wodurch die Massenkräfte weiterhin herabgesetzt werden. Auch der Mitnehmer, mit dem die Bewegung der Steuerstange auf den Steuerschieber übertragen wird, besteht gemäß Anspruch 6 vorzugsweise aus Kunststoff. Auch dies trägt zur Verminderung von Massenkräften bei. Gemäß Anspruch 7 können auch die Druckstücke der Kipphebel aus Kunststoff bestehen. Auch diese Teile müssen rasche Bewegungen ausführen, weshalb es vorteilhaft ist, wenn auch diese Teile eine geringe Masse haben. Wenn die genannten Teile (Schiebeteile des Steuerschiebers, Mitnehmer, Druckstücke) im Entspannungsraum liegen bzw. an diesen angrenzen (Anspruch 8), bringt die Verwendung von Kunststoff für diese Bauteile den zusätzlichen Vorteil, daß Reifbildung vermieden wird. Bei Metallteilen nämlich wird häufig eine Vereisung beobachtet, die auf der Abkühlung der Luft bei ihrer Entspannung beruht. Diese wird vermieden, wenn schlecht wärmeleitende Teile im Entspannungsbereich vorgesehen werden.

Eine vorteilhafte Führung und Abdichtung der Kolbenstange wird mit den Mitteln des Anspruches 9 erreicht.

In der Zeichnung ist ein Ausführungsbeispiel der Erfindung vereinfacht dargestellt. Es zeigen:

Fig. 1 einen diametralen Längsschnitt durch einen Luftmotor entsprechend der Linie I-I in Fig. 2 und

Fig. 2 einen Horizontalschnitt entsprechend der Linie II-II in Fig. 1.

Der Luftmotor hat eine Zylinderbüchse 1, die unten durch einen Zylinderboden 2 und oben durch einen Zylinderkopf 3 abgeschlossen ist. In der Zylinderbüchse 1 ist ein Kolben 4 hin- und herbewegbar. Die Druckluftbeaufschlagung wird mit Hilfe des insgesamt mit 5 bezeichneten Steuerschiebers gesteuert.

In den Kolben 4 ist eine rohrförmige Kolbenstange 6 eingeschraubt. Die Kolbenstange 6 durchgreift den Zylinderboden 2. An der dem Zylinderinnenraum 7 zugewendeten Seite des Zylinderbodens 2 befindet sich eine Lippendichtung 8, die mit einer Dichtlippe außen an der Kolbenstange 6 anliegt. Die Kolbenstange ist in einem Führungsring 9 aus Kunststoff geführt, der in den Zylinderboden 2 eingelassen ist. Unterhalb des Führungsringes 9 befindet sich ein Abstreifring 10, der eine Dichtlippe 10a aufweist. Die Dichtlippe 10a verhindert ein Eindringen von Schmutz in den Zylinderraum 7 und die Lippendichtung 8 das Entweichen von Luft aus dem Zylinderraum.

In die hohle Kolbenstange 6 greift eine Steuerstange 11 ein, die relativ zu der Kolbenstange 6 beweglich ist. Am unteren Ende der Steuerstange 11 befindet sich ein Kopf 12, der an einem Ring 13 zur Anlage kommen kann. Der Ring 13 kann sich auf einer Schulter 14 abstützen, die sich in der Bohrung 15 der Kolbenstange 6 befindet. Auf dem Ring 13 stützt sich eine Schraubendruckfeder 16 ab, deren anderes Ende an einem Ring 17 anliegt. Der Ring 17 stützt sich an einer Schulter 18 ab, die sich an der Steuerstange 11 befindet.

Die Steuerstange 11 durchgreift einen Boden 19 des Zylinderkopfes, in dem sich eine Lippendichtung 20 befindet, die mit einer Dichtlippe an der Steuerstange 11 anliegt. An ihrem oberen Ende trägt die Steuerstange 11 einen Mitnehmer 21, der vorzugsweise aus Kunststoff besteht. Der Mitnehmer 21 ist mittels eines Führungsbolzens 22 gehalten, der mittels eines zentralen Gewindes auf das mit Gewinde versehene Ende 11a der Steuerstange 11 aufgeschraubt ist. Der Führungsbolzen 22 greift in eine Führungsbohrung 23 ein, die sich in einem Zylinderkopf-deckel 24 befindet.

0143428

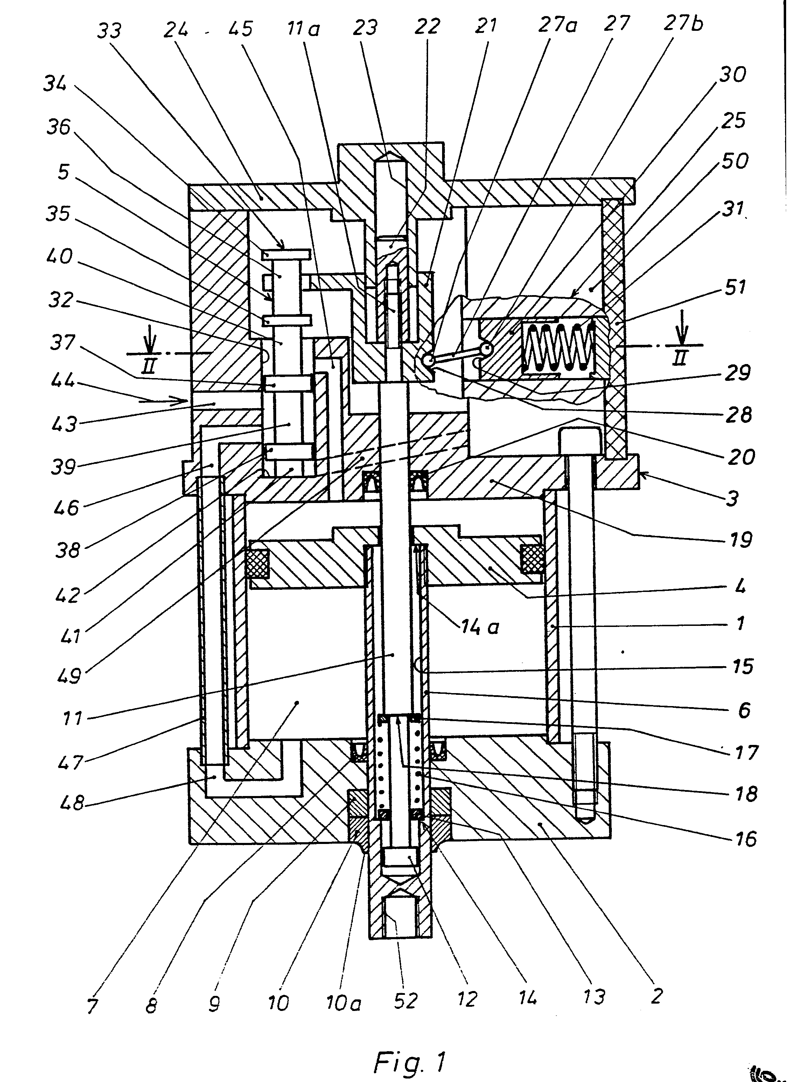

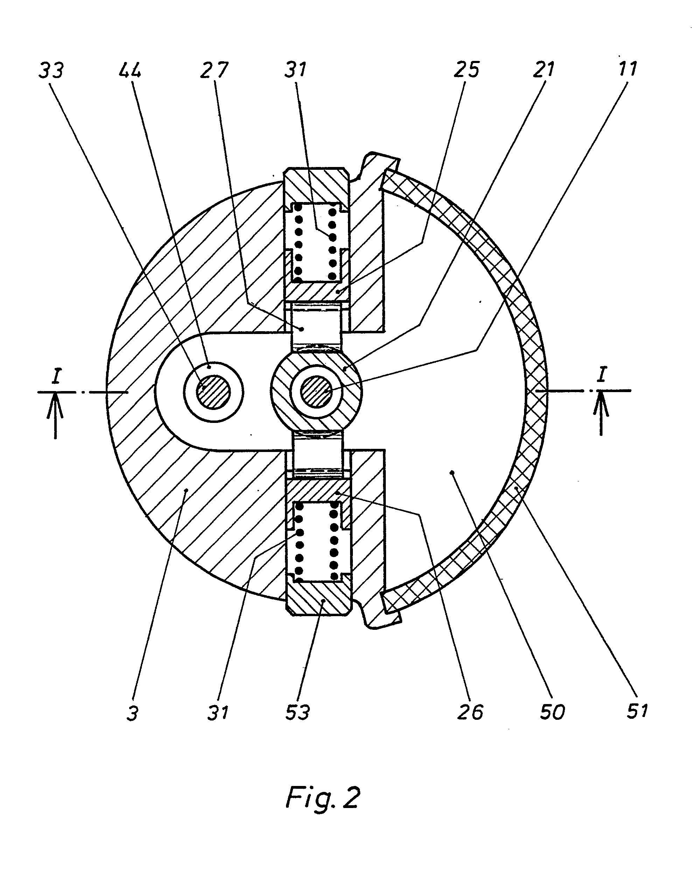

Auf den starr mit der Steuerstange 11 verbundenen Mitnehmer 21 wirken zwei insgesamt mit 25 und 26 bezeichnete Schnepper ein. Ein Schnepper ist in Fig. 1 um 90° versetzt gezeichnet. Es sei angenommen, daß es sich um den Schnepper 25 handelt. Der Schnepper 26 ist gleich ausgebildet. Der Schnepper hat einen Kipphebel 27, der sich mit einem ersten zylindrischen Endteil 27a in einer Ausnehmung 28 des Mitnehmers 21 abstützt und einen zweiten zylindrischen Teil 27b, der in eine Ausnehmung 29 eines Schiebeteiles 30 eingreift. Auf den Schiebeteil 30 drückt eine Schraubendruckfeder 31, die mit ihrem äußeren Ende in einem Gegenlager 53 (siehe Fig. 2) abgestützt ist. Die Vorspannung der Feder 31 ist so, daß sie bei jeder Lage des Kipphebels 27 noch eine gewisse Kraft erzeugt. Der Schiebeteil 30 besteht ebenfalls aus Kunststoff.

Im Zylinderkopf 3 befindet sich eine Schieberbohrung 32, in der ein aus Kunststoff bestehender Schiebeteil 33 bewegbar ist, und zwar mit Hilfe des Mitnehmers 21. Der Schiebeteil 33 hat zwei Anschläge 34 und 35, die als Bunde ausgebildet sind, zwischen denen sich ein Abschnitt 36 erstreckt. Der Mitnehmer 21 ist an seinem linken Ende gabelförmig ausgebildet. Der Abschnitt 36 greift zwischen die Gabelarme ein. Der Zwischenraum zwischen den Gabelarmen ist nur wenig größer als der Durchmesser des Abschnittes 36, jedoch wesentlich kleiner als die Durchmesser der Anschlagbunde 34 und 35. -

In dem in die Schieberbohrung 32 eingreifenden Teil des Schiebeteiles 33 hat dieser zwei Steuerkolben 37 und 38, die dichtend in die Schieberbohrung 32 eingreifen. Zwischen den Steuerkolben 37, 38 befindet sich ein Abschnitt 39, dessen Durchmesser wesentlich geringer ist als der Durchmesser der Zylinderbohrung 32. Ein oberhalb des Steuerkolbens 37 befindlicher Abschnitt 40 hat ebenfalls einen kleineren Durchmesser als die Schieberbohrung 32. Unterhalb des Steuerkolbens 38 befindet sich ein Abschnitt 41, mit dem der Schiebeteil 33 am Boden 42 der Schieberbohrung 32 zur Anlage kommen kann.

0143428

Etwa in der Längsmitte der Schieberbohrung 32 mündet in diese eine Bohrung 43, an die eine Luftleitung anschließbar ist, über die entsprechend dem Pfeil 44 Druckluft zugeführt werden kann. Vom oberen Bereich der Schieberbohrung 32 geht eine Bohrung 45 aus, die von oben her in den Zylinderraum 7 einmündet. Vom unteren Bereich der Schieberbohrung 32 geht ein Kanal 46 aus, der in ein Rohr 47 einmündet. Das Rohr 47 mündet mit seinem unteren Ende in einen Kanal 48, der von unten her in den Zylinderraum 7 eindringt. Vom unteren Ende der Schieberbohrung 32 geht ein Kanal 49 aus, der in einen Entspannungsraum 50 einmündet.

Der Entspannungsraum 50 ist gegenüber der Umgebung durch einen Filter 51 abgeschlossen. Der Filter 51 gestattet den Austritt von Abluft in die Umgebung, hält jedoch Öltröpfchen fest. Der Filter kann aus kleinen Kunststoffteilchen bestehen, die miteinander verklebt oder verschweißt sind.

Der Luftmotor arbeitet wie folgt. In der Zeichnung ist der Zustand bei der Aufwärtsbewegung des Kolbens 4 gezeigt. In dieser Situation befindet sich der Schiebeteil 33 in seiner untersten Stellung, wobei der Abschnitt 41 am Boden 42 anliegt. Druckluft strömt über die Bohrung 43 zu und gelangt über die Schieberbohrung 32, den Kanal 46, das Rohr 47 und den Kanal 48 in den Zylinderraum 7 unterhalb des Kolbens 4 und drückt dadurch diesen nach oben. Hierbei wird die Feder 16 zunehmend gespannt, da die Steuerstange 11 zunächst durch die Wirkung der Schnepper 25, 26 in seiner unteren Lage gehalten wird. Wenn die Feder 16 eine gewisse Spannung erreicht hat, überwindet sie die Kraft der Schnepper, wobei die Federn 31 komprimiert werden. Schließlich wird der Totpunkt der Schnepper überwunden, in dem die Kipphebel 27 horizontal liegen. Die Zeichnung zeigt einen Zustand, bei dem die Steuerstange 11 ihre tiefste Stellung bereits verlassen hat und die Federn 31 bereits teilweise zusammengedrückt sind. Nachdem die horizontale Lage (Totpunkt) der Kipphebel 27 überwunden ist, beginnen die Schnepper in dem Sinne zu wirken, daß sie die Steuerstange nach oben zu drücken versuchen. Die Feder 16 wirkt im gleichen Sinne, so daß die Steuerstange schlagartig nach oben gedrückt wird. Der Mitnehmer 21 kommt dabei schließlich an dem oberen Anschlag 34 des Schiebeteiles 33 zur Anlage und bewegt den Schiebeteil 33 schlagartig nach oben. Da der Schiebeteil 33 relativ kurz ist und aus Kunststoff besteht, sind die dabei auftretenden Massenkräfte relativ gering.

Während der Aufwärtsbewegung des Kolbens 4 strömt die oberhalb des Kolbens 4 befindliche Luft über den Kanal 45 und die Schieberbohrung 32 in den Entspannungsraum 50. Hierzu ist zu bemerken, daß im unteren Totpunkt des Kolbens 4 die Luft, die vorher Arbeit geleistet hat, zunächst noch unter vollem Druck steht, z.B. unter einem Druck von 6 Bar. Nachdem der Weg zum Entspannungsraum freigegeben wurde, findet also zunächst eine rasche Ausströmung und Entspannung der Druckluft statt, so daß bei der Aufwärtsbewegung des Kolbens 4 nur noch ein relativ kleiner Teil der Luft verdrängt wird.

Wenn sich der Schiebeteil 33 in seiner oberen Stellung befindet, liegt der untere Steuerkolben 38 im Bereich zwischen den Einmündungen der Kanäle 43 und 46 in die Schieberbohrung 32, während der obere Steuerkolben 37 oberhalb der Einmündung des Kanales 45 liegt. Damit steht der Raum unterhalb des Kolbens 4 über den Kanal 48, das Rohr 47, den Kanal 46, die Schieberbohrung 32 und den Kanal 49 mit dem Entspannungsraum 50 in Verbindung. Die Druckluft entspannt sich damit rasch im Raum 50. Bei der folgenden Abwärtsbewegung des Kolbens wird nur noch ein Luftrest über den genannten Weg in den Entspannungsraum 50 gedrängt. Frische Druckluft strömt über den Kanal 43 in die Schieberbohrung 32 ein und gelangt über den Kanal 45 in den Zylinderraum 7 oberhalb des Kolbens 4, wodurch dieser nach unten gestoßen wird.

0143428

Bei der Abwärtsbewegung des Kolbens 4 bleibt die Steuerstange 11 zunächst in ihrer oberen Stellung, wobei der Kopf 12 der Steuerstange am Ring 13 anliegt und dieser Ring auf der Schulter 14 in der Kolbenstange 6 aufliegt. Mit zunehmender Abwärtsbewegung der Kolbenstange 6 nimmt der Druck auf die Kipphebel zu, wird aber zunächst noch nicht überwunden. Vor dem Umschalten der Schnepper nämlich wird die Feder 16 unter Abheben des Ringes 17 von der Schulter 14a gespannt, die sich am Kolben 4 befindet. Dadurch wird die Abwärtskraft auf die Steuerstange 11 zunehmend größer, bis schließlich die Schnepper über ihren Totpunkt hinwegbewegt werden und dann eine Bewegung schlagartig nach unten erfolgt, wobei die Schnepper und die Feder 16 die Abwärtskraft gemeinsam erzeugen. Auch diese Umschaltbewegung kann dank der geringen Massen, die aufgrund der geringen Baulänge des Schiebeteiles 33 und aufgrund der Verwendung des leichten Werkstoffes Kunststoff erreicht werden, rasch ausgeführt werden.

Bei der Entspannung der Druckluft im Entspannungsraum 50 kühlt sich die Luft ab. Eine Vereisung des Zylinderkopfes jedoch tritt hierbei nicht ein, zum einen durch die Verwendung schlecht wärmeleitender Funktionsteile und zum anderen auch aufgrund der Tatsache, daß der Entspannungsraum durch eine Wand 19 begrenzt ist, die an den Zylinderraum 7 angrenzt. Dadurch wird Wärme aus der frisch zugeführten Druckluft auf den Entspannungsraum übertragen.

Am unteren Ende der Kolbenstange 6 befindet sich ein Gewinde 52, an dem die Kolbenstange einer Hochdruckpumpe angeschlossen werden kann, z.B. einer Hochdruckpumpe eines Farbspritzgerätes, mit dem ohne Beimischung von Luft zu versprühender Lack unter einem hohen Druck von z.B. 200 Bar gesetzt werden kann.

Ansprüche:

1. Luftmotor für Farbspritzgeräte, Fettpressen und dergleichen, mit einem Zylinder großen Durchmessers, in dem ein von der treibenden Luft beaufschlagter Kolben angeordnet ist und einer Steuereinrichtung mit einem Schieber, der in der Nähe der Endstellungen des Kolbens die Luft zum Zylinder umsteuert, wobei der Schieber durch eine mit Anschlägen versehene Stange (Steuerstange) über einen mit der Steuerstange verbundenen Mitnehmer bewegt wird, welche Steuerstange mit der Kolbenstange des Kolbens so verbunden ist, daß diese erst in der Nähe der Endstellungen über die Anschläge mit der Steuerstange gekuppelt wird, wobei auf einem in die Kolbenstange eingreifenden Teil der Steuerstange eine Feder zur Vorspannung der Steuerstange vorgesehen ist und die Steuerstange mittels mindestens eines Hebels (Kipphebel) in axialer Richtung gedrückt wird, der unter einer rechtwinklig zur Steuerstange wirkenden Federkraft steht, die die Steuerstange einerseits eines mittleren Totpunktes nach oben und andererseits dieses Totpunktes nach unten drückt, dadurch gekennzeichnet, daß der Steuerschieber (5) innerhalb eines den Zylinder (1) an einem Ende (Zylinderkopf-Ende) abschließenden Zylinderkopfes (3) angeordnet ist und vom Steuerschieber (5) eine Leitung (46, 47, 48) zum anderen Ende (Zylinderboden-Ende) des Zylinders (1) geführt ist.

2. Luftmotor nach Anspruch 1, dadurch gekennzeichnet, daß die Leitung (46, 47, 48) teilweise aus einem Rohr (47) besteht, das außerhalb einer Zylinderbüchse verläuft und in den Zylinderkopf (3) sowie in einen Zylinderboden (2) dicht eingesetzt ist.

3. Luftmotor nach einem der vorhergehenden Ansprüche, dadurch gekennzeichnet, daß im Zylinderkopf (3) ein Entspannungsraum (50) angeordnet ist, der über den Schieber (5) mit beiderseits des Kolbens (4) befindlichen Zylinderräumen (7) verbindbar ist.

4. Luftmotor nach Anspruch 3, dadurch gekennzeichnet, daß eine in die Umgebung mündende Auslaßöffnung des Entspannungsraumes (50) mit einem Filter (51) abgeschlossen ist, der vorzugsweise aus miteinander verschweißten oder verklebten Kunststoffteilchen besteht.

5. Luftmotor nach einem der vorhergehenden Ansprüche, dadurch gekennzeichnet, daß mindestens der Schiebeteil (33) des aus Schieberbohrung (32) und Schiebeteil (33) bestehenden Schiebers (5) aus Kunststoff besteht, vorzugsweise aus Polyoxymethylen (POM).

6. Luftmotor nach einem der vorhergehenden Ansprüche, dadurch gekennzeichnet, daß der die Steuerstange (11) mit dem Schiebeteil (33) verbindende Mitnehmer (21) aus Kunststoff, vorzugsweise aus Polyoxymethylen (POM) besteht.

7. Luftmotor nach einem der vorhergehenden Ansprüche, dadurch gekennzeichnet, daß ein auf den Kipphebel (27) einwirkendes Druckstück (30), auf das eine Druckfeder (31) einwirkt, aus Kunststoff besteht, vorzugsweise aus Polyoxymethylen (POM).

8. Luftmotor nach einem der Ansprüche 3 bis 7, dadurch gekennzeichnet, daß der Schiebeteil (33) des Schiebers (5), der Mitnehmer (21) und das Druckstück (27) im Entspannungsraum (50) liegen bzw. an diesen angrenzen.

9. Luftmotor nach einem der vorhergehenden Ansprüche, dadurch gekennzeichnet, daß im Zylinderboden (2) an der Austrittsstelle der Kolbenstange (6) ein Führungsring (9) und ein Abstreifring (10) angeordnet sind, die vorzugsweise aus Kunststoff bestehen.

0143428

Fig. 1

Fig. 2

0143428

2/2